# EUROPEAN PATENT SPECIFICATION

(11) **EP 4 109 612 B1**
(45) Date of publication and mention of the grant of the patent: **16.10.2024**
(21) Application number: 21775988.5
(22) Date of filing: 18.03.2021
(51) Int. Cl.: H01M 10/04, H01M 10/0525, H01M 10/0585

(54) **UNIT CELL MANUFACTURING APPARATUS AND METHOD**
VORRICHTUNG UND VERFAHREN ZUR HERSTELLUNG VON EINHEITSZELLEN
APPAREIL ET MÉTHODE DE FABRICATION DE CELLULES UNITAIRES

(30) Priority: 25.03.2020 KR 20200036392
(43) Date of publication of application: 28.12.2022
(73) Proprietor: LG Energy Solution, Ltd., Seoul 07335 (KR)
(72) Inventor: KWON, Soon Kwan, Daejeon 34122 (KR); JUNG, Su Taek, Daejeon 34122 (KR); LEE, Byeong Kyu, Daejeon 34122 (KR); JUNG, Tai Jin, Daejeon 34122 (KR); CHOI, Seong Won, Daejeon 34122 (KR); CHO, Ju Hyeon, Daejeon 34122 (KR)
(74) Representative: Plasseraud IP
(86) International application number: PCT/KR2021/003372
(87) International publication number: WO 2021/194164

(56) References cited:
- EP-A1- 3 557 675
- KR-A- 20170 057 251
- KR-A- 20180 028 714
- KR-A- 20190 045 602
- KR-A- 20190 124 544
- KR-A- 20190 124 544
- KR-A- 20200 023 854

## Description

### TECHNICAL FIELD

### Cross-reference to Related Applications

The present application claims the benefit of the priority of Korean Patent Application No. 10-2020-0036392, filed on March 25, 2020.

### Technical Field

The present invention relates to unit cell manufacturing apparatus and method, and more particularly, to unit cell manufacturing apparatus and method which may prevent the reduction in adhesion force of the side of a unit cell.

### BACKGROUND ART

In general, types of secondary batteries include a nickel cadmium battery, a nickel hydride battery, a lithium ion battery, and a lithium ion polymer battery. These secondary batteries are not only applied and used in small products such as digital cameras, P-DVDs, MP3Ps, mobile phones, PDAs, portable game devices, power tools, and E-bikes, but are also applied and used in large products requiring high output, such as electric vehicles and hybrid vehicles, and a power storage device and a power storage device for backup which store surplus generated power or renewable energy.

A single electrode assembly is formed by assembling unit cells, each of which is formed by stacking a cathode, a separator, and an anode. Also, the electrode assembly is accommodated in a specific case, thereby manufacturing a lithium secondary battery.

These unit cells include full-cells and bi-cells. Each of the full-cells is a cell in which a cathode and an anode are disposed at both the outermost portions of the cell, respectively. As the most basic structure of the full-cell, there is a cathode/separator/anode structure, a cathode/separator/anode/separator/cathode/separator/anode structure, or the like.

Each of the bi-cells is a cell in which electrodes having the same polarity are disposed at both the outermost portions of the cell. As the most basic structure of the bi-cell, there is an A-type bi-cell having a cathode/separator/anode/separator/cathode structure, a C-type bi-cell having an anode/separator/cathode/separator/anode structure, or the like. That is, the cell in which cathodes are disposed at both the outermost portions thereof is referred to as an A-type bi-cell, and the cell in which anodes are disposed at both the outermost portions thereof is referred to as a C-type bi-cell.

In general, in order to prepare such a unit cell, separators are respectively stacked on upper and lower surfaces of a center electrode while the center electrode is moved to one side by a conveyor belt or the like, and thereafter, an upper electrode and a lower electrode are further stacked. If the unit cell is a bi-cell, the center electrode may be provided in an odd number such as one, and if the unit cell is a full-cell, the center electrode may be provided in an even number such as two.

Meanwhile, it is very important to evaluate and secure the safety of the electrode assembly. First of all, it should be considered that errors in operation of the electrode assembly should not cause damage to users. For this purpose, the Safety Regulation strictly regulates ignition and explosion in the electrode assembly. In the safety characteristics of the electrode assembly, thermal runaway caused by overheating of the electrode assembly or puncture of a separator may increase the risk of explosion. In particular, a polyolefin-based porous substrate commonly used as a separator of an electrode assembly shows extreme thermal shrinking behavior at a temperature of 100 °C or higher due to the features of its material and its manufacturing process such as elongation, thereby resulting in an electric short circuit between a cathode and an anode.

In order to solve the above safety-related problems of the electrode assembly, there is suggested a separator having a porous organic-inorganic coating layer formed by coating at least one surface of a porous polymer substrate having a plurality of pores with a slurry containing a mixture of excess inorganic particles and a polymer binder. Since inorganic particles contained in the porous organic-inorganic coating layer have excellent heat resistance, even when the electrode assembly is overheated, an electric short circuit between a cathode and an anode is prevented.

However, when the porous coating layer is thinly coated, for example, to a thickness of less than 3 um based on the cross-section of the porous substrate, the adhesion between the separator and the electrode is insufficient, resulting in a decrease in assembly properties. When the adhesion between the separator and the electrode is excellent, it is possible to prevent an increase in interfacial resistance caused by detachment of the separator and the electrode by gas generated as an electrolyte decomposition product during the cycle of the electrode assembly. In addition, it is possible to prevent an increase in the interfacial resistance between the separator and the electrode due to volume expansion of the electrode during cycling, and it is possible to improve the strength of the electrode assembly by suppressing the bending of the electrode assembly in the form of jelly-roll or stack & folding. In this regard, the adhesion between the separator and the electrode is a very important factor in the electrode assembly.

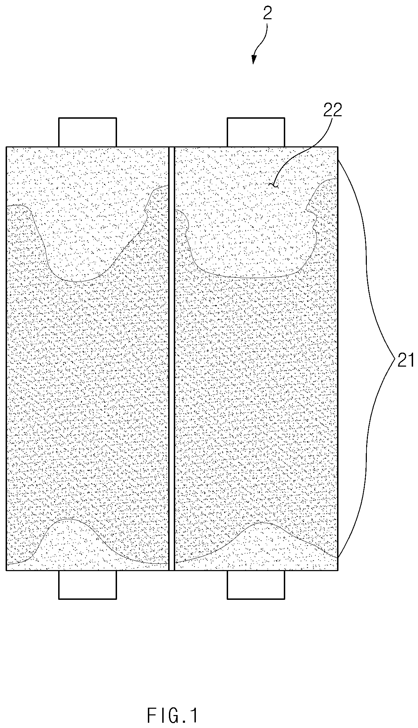

FIG. 1 is a schematic view illustrating a non-adhesive region 22 of a unit cell 2.

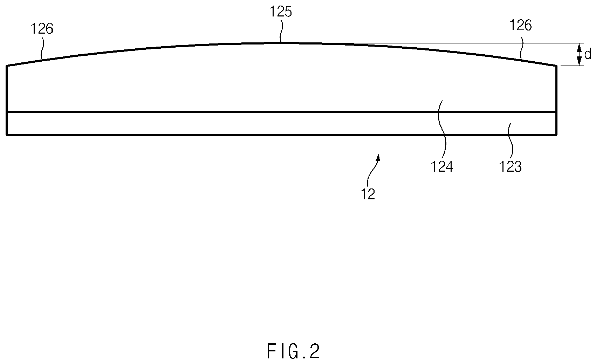

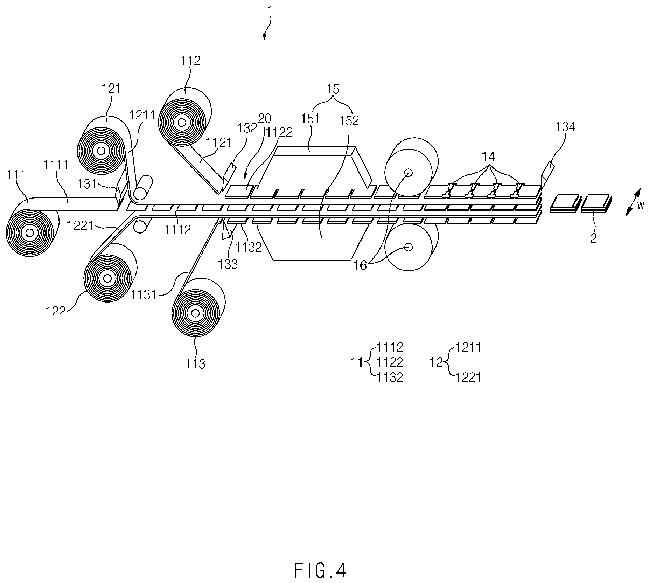

In the related art, a separator 12 (shown in FIG. 2) was prepared by applying a slurry to a polymer substrate 123 (shown in FIG. 2) to form a porous coating layer 124 (shown in FIG. 2). In addition, electrodes 11 (shown in FIG. 4) are stacked on the separator 12 and heat and pressure are applied thereon to manufacture a unit cell 2 as shown in FIG. 1.

However, because the porous coating layer 124 is formed by applying a liquid or gel slurry onto the polymer substrate 123 and then solidifying it, there is a certain height difference from the surface even if the slurry is applied evenly and uniformly. In particular, the slurries were more aggregated in the center 125 (shown in FIG. 2) than in the side 126 (shown in FIG. 2) of the separator 12, and thus the height of the slurry was formed lower in the side 126 than in the center 125. Therefore, in the side 126 and the center 125 of the separator 12, there is a height difference even in the porous coating layer 124 obtained by solidifying the slurry, and thus even if the electrode 11 is stacked to manufacture the unit cell 2, deviation occurred in the adhesion of the separator 12. Therefore, as shown in FIG. 1, there was a problem in that the electrode 11 and the separator 12 did not adhere to each other or poorly adhered to each other, forming the non-adhesive region 22 on a portion of the side 21 of the unit cell 2.

As a prior art document, there is Korean Patent Application Laid-Open Publication No. 2017-0057251. Further examples of background art can be found in EP3557675A1 and KR20190124544A.

### DISCLOSURE OF THE INVENTION

### TECHNICAL PROBLEM

An object of the present invention is to prevent the reduction in adhesion force of the side of a unit cell.

The objects of the present invention are not limited to the aforementioned object, but other objects not described herein will be clearly understood by those skilled in the art from descriptions below.

### TECHNICAL SOLUTION

The invention is set out in the appended set of claims.

According to an aspect of the present invention, there is provided a unit cell manufacturing apparatus including: an electrode reel from which an electrode sheet, which is to be a plurality of electrodes, is unwound; a separator reel from which a separator sheet to be stacked with the electrodes is unwound; and a sealer, in a stack which is formed by stacking the plurality of electrodes with the separator sheet while the plurality of electrodes are spaced apart from each other and disposed in a row in the longitudinal direction of the separator sheet, the sealer which is disposed between the plurality of electrodes and applies heat and pressure to at least one of corners of the electrodes or edges of the electrodes ; and a laminator which laminates the stack.

In addition, the sealer may include a first body and a second body vertically extending from the first body.

Furthermore, the sealer may further include: a first protrusion which protrudes downward from a lower surface of the first body and is elongated in a longitudinal direction of the first body; and a second protrusion which protrudes downward from a lower surface of the second body and is elongated in a longitudinal direction of the second body.

In addition, the laminator may include a heater which applies heat and pressure to the entire surface of the stack.

Also, the laminator may further include a heating roller which applies heat and pressure to the stack while rotating.

Furthermore, the electrode reel may include a center electrode reel from which a center electrode sheet, which is to be a plurality of center electrodes, is unwound, and the separator reel may include: an upper separator reel from which an upper separator sheet to be stacked on an upper surface of the center electrode, which is formed by cutting the center electrode sheet, is unwound; and a lower separator reel from which a lower separator sheet to be stacked on a lower surface of the center electrode is unwound.

In addition, the electrode reel may further include: an upper electrode reel from which an upper electrode sheet, which is to be upper electrodes to be stacked on the upper surface of the upper separator sheet, is unwound; and a lower electrode reel from which a lower electrode sheet, which is to be lower electrodes to be stacked on the lower surface of the lower separator sheet, is unwound.

According to an aspect of the present invention, there is provided a unit cell manufacturing method including: cutting an electrode sheet unwound from an electrode reel to form a plurality of electrodes; forming a stack by stacking the plurality of electrodes on separator sheet unwound from a separator reel while the plurality of electrodes are spaced apart from each other and disposed in a row in a longitudinal direction of the separator sheet; disposing a sealer between the plurality of electrodes in the stack; and applying, with the sealer, heat and pressure to at least one of corners of the electrode or edges of the electrode, and laminating the stack after the forming of the stack and before the disposing of the sealer.

In addition, the sealer may include a first body and a second body vertically extending from the first body.

Also, in the applying heat and pressure, the first body may apply heat and pressure to a first edge, which is directed toward the outside of the stack, among the edges of the electrode, and the second body may apply heat and pressure to a second edge, which faces another neighboring electrode and crosses with the first edge to form the corner, among the edges of the electrode.

Furthermore, the sealer may further include: a first protrusion which protrudes downward from a lower surface of the first body and is elongated in a longitudinal direction of the first body; and a second protrusion which protrudes downward from a lower surface of the second body and is elongated in a longitudinal direction of the second body.

Also, in the applying heat and pressure, the first protrusion may apply heat and pressure to a first region, which extends to the outside from the first edge of the electrode, of the separator sheet, and the second protrusion may apply heat and pressure to a second region, which is formed between the plurality of electrodes, of the separator sheet.

Also, the laminating may further include: applying heat and pressure to an entire surface of the stack by a heater; and applying heat and pressure to the stack by a heating roller while the heating roller rotates.

Other specific details of the present invention are included in the detailed description and drawings.

### ADVANTAGEOUS EFFECTS

The embodiments of the present invention may have at least the following effects.

In a stack which is formed by stacking the plurality of electrodes on the separator sheet, a sealer applies heat and pressure to at least one of the corners of the electrode or the edges of the electrode, and thus it may prevent the formation of non-adhesive regions on the side of a unit cell, thereby preventing the reduction of the adhesion between the electrode and the separator.

The effects according to the present invention are not limited to the contents as exemplified above, but more various effects are included in the specification.

### BRIEF DESCRIPTION OF THE DRAWINGS

FIG. 1 is a schematic view illustrating a non-adhesive region of a unit cell;
FIG. 2 is a schematic view of a separator according to an embodiment of the present invention;
FIG. 3 is a flowchart of a unit cell manufacturing method according to an embodiment of the present invention;
FIG. 4 is a schematic view of a unit cell manufacturing apparatus according to an embodiment of the present invention;
FIG. 5 is a perspective view of a sealer according to an embodiment of the present invention;
FIG. 6 is a plan view illustrating a state in which sealers according to an embodiment of the present invention applies heat and pressure to a stack;
FIG. 7 is a side view illustrating a state in which a sealer according to an embodiment of the present invention applies heat and pressure to a stack;
FIG. 8 is a schematic view of a unit cell manufacturing apparatus according to another embodiment of the present invention;
FIG. 9 is a perspective view of a sealer according to still another embodiment of the present invention; and
FIG. 10 is a side view illustrating a state in which a sealer according to still yet another embodiment of the present invention applies heat and pressure to a stack.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings commonly understood by those skilled in the art. Also, unless defined clearly and apparently in the description, the terms as defined in a commonly used dictionary are not ideally or excessively construed as having formal meaning.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

Hereinafter, preferred embodiments will be described in detail with reference to the accompanying drawings.

FIG. 2 is a schematic view of a separator 12 according to an embodiment of the present invention.

As shown in FIG. 2, the separator 12 according to an embodiment of the present invention is prepared by coating a slurry containing a mixture of inorganic particles and a polymer binder on at least one surface of a porous polymer substrate 123 to form a porous coating layer 124.

The porous polymer substrate 123 is not limited but includes a variety of substrates as long as it is a planar porous substrate commonly used in an electrode assembly, such as a porous polymer film substrate formed of various polymers or a porous polymer non-woven fabric substrate. For example, a polyolefin-based porous polymer film such as polyethylene or polypropylene, which is used as the separator 12 in an electrode assembly, particularly, a lithium secondary battery, or a non-woven fabric made of polyethylene terephthalate fiber may be used, and their material or form may be variously selected depending on a desired purpose. This polyolefin porous polymer film may be formed of a polyolefin-based polymer, for example, polyethylene such as high-density polyethylene, linear low-density polyethylene, low-density polyethylene and ultra-high molecular weight polyethylene, polypropylene, polybutylene, polypentene, either individually or as a mixture thereof. Also, the porous polymer film substrate may be prepared by using various polymers such as polyester in addition to polyolefin. In addition, the porous polymer substrate may be formed in a structure in which two or more film layers are stacked, and each film layer may be formed of polymer such as polyolefin and polyester as described above, either individually or as a mixture of two or more of these.

The porous polymer non-woven fabric substrate may be non-woven fabric formed of polymers including polyolefin-based polymers as described above, or other polymers with higher heat resistance, for example, polyethyleneterephthalate, polybutyleneterephthalate, polyester, polyacetal, polyamide, polycarbonate, polyimide, polyetheretherketone, polyaryletherketone, polyetheramide, polyamideimide, polybenzimidazole, polyethersulfone, polyphenyleneoxide, a cyclic olefin copolymer, polyphenylenesulfide, polyethylenenaphthalene, either individually or as a mixture thereof. In addition, the non-woven fabric may be a spun-bond or melt-blown fabric consisting of a long fiber in structure. However, the porous polymer material 123 is not limited thereto, and may be selected variously in material or form.

The thickness of the porous polymer substrate 123 is not particularly limited, but preferably 1-100 um, and more preferably 5-50 um. Also, a pore size and a porosity in the porous polymer substrate 123 are not particularly limited, but preferably 0.01-50 um, and 10-95%, respectively.

On at least one surface of the porous polymer substrate 123, a slurry containing containing a mixture of inorganic particles and a polymer binder is coated to form the porous coating layer 124. The coating method of the slurry is not limited, and a variety of methods may be used, but a dip coating method is preferably used. Dip coating is a method for coating a substrate by immersing the substrate in a tank containing a coating solution, and the thickness of the porous coating layer 124 can be adjusted according to the concentration of the coating solution and the speed at which the substrate is taken out of the coating solution tank. Thereafter, the substrate is dried in an oven to form the porous coating layer 124 on at least one surface of the porous polymer substrate 123.

The inorganic particles are not particularly limited as long as they are electrochemically stable. That is, the inorganic particles that may be used in the present invention are not particularly limited as long as an oxidation and/or a reduction reaction are/is not generated within an operating voltage range (for example, 0-5 V with respect to Li/Li+) of the applied electrode assembly. Particularly, when inorganic particles having high permittivity are used as inorganic particles, it may contribute to an increase in a dissociation rate of an electrolyte salt such as a lithium salt in a liquid electrolyte, thereby enhancing the ionic conductivity of the electrolyte solution.

For these reasons, the inorganic particles preferably include high-permittivity inorganic particles having a dielectric constant of 5 or more, preferably, 10 or more. Non-limiting examples of the inorganic particles having a dielectric constant of 5 or more may include, for example, BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂) , SrTiO₃, SnO₂, CeO₂, MgO, NiO, CaO, ZnO, ZrO₂, Y₂O₃, Al₂O₃, boehmite (γ-Al(OH)), TiO₂, SiC or a mixture thereof.

In particular, the inorganic particles such as of BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT) and hafnia (HfO₂) show a high permittivity characteristic, which is a dielectric constant of 100 or more, and also have piezoelectricity since charges are generated to make a potential difference between both surfaces when a certain pressure is applied thereto to extend or shrink them, so that the above inorganic particles may prevent generation of an internal short circuit of both electrodes 11 caused by an external impact and thus improve the safety of the electrochemical device. In addition, when the aforementioned high-permittivity inorganic particles and inorganic particles having lithium ion transfer capability are used in combination, the synergetic effect thereof may double.

The inorganic particles having lithium ion transferring capability, that is, inorganic particles, which contain lithium elements but have a function of moving lithium ions without storing the lithium, may be used. Because the inorganic particles having lithium ion transferring capability may transfer and move lithium ions due to a kind of defect existing in the particle structure, the lithium ion conductivity in the battery may be improved, thereby improving the performance of the battery. In addition, non-limiting examples of inorganic particles having lithium ion transfer capability may include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (0 < x < 4, 0 < y < 13) such as 14Li₂O-9Al₂O₃-38TiO₂-39P₂O₅, lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5) such as Li_{3.25}Ge_{0.25}P_{0.75}S₄, lithium nitride (LiₓN_{y}, 0 < x < 4, 0 < y < 2) such as Li₃N, SiS₂-based glass (LiₓSi_{y}S_{z}, < x < 3, 0 < y < 2, 0 < z < 4) such as Li₃PO₄-Li₂S-SiS₂, P₂S₅-based glass (LiₓP_{y}S_{z}, 0 < x < 3, 0 < y < 3, 0 < z < 7), such as LiI-Li₂S-P₂S₅, or a mixture thereof.

The average particle diameter of the inorganic particles is not particularly limited, but is preferably in a range of 0.001-10 um in order to form the porous coating layer 124 having a uniform thickness and ensure suitable porosity. If the average particle diameter is less than 0.001 um, a dispersing property of inorganic particles may be deteriorated. If the average particle diameter is greater than 10 um, the thickness of the porous coating layer 124 to be formed is increased, which may deteriorate mechanical properties. Also, an excessively large pore size may increase the probability of internal short circuit while a battery is charged or discharged.

A polymer having a glass transition temperature (Tg) ranging from -200 °C to 200 °C is preferably used as the polymer binder, since this polymer may improve mechanical properties such as flexibility and elasticity of the finally formed porous coating layer 124.

In addition, the ion transferring capability is not essential to the polymer binder, but using the polymer having ion transferring capability may further improve the performance of an electrode assembly. Therefore, the polymer binder preferably has a dielectric constant as high as possible. In fact, because a dissociation degree of salts in an electrolyte solution depends on a dielectric constant of an electrolyte solvent, as a dielectric constant of the polymer binder is higher, the dissociation degree of salts in the electrolyte solution may increase. The polymer binder may have a dielectric constant of 1.0 to 100 (measuring frequency = 1 kHz), preferably 10 or higher.

In addition to the aforementioned functions, the polymer binder may be gelatinized when impregnated with a liquid electrolyte solution to thus exhibit a high degree of swelling in an electrolyte solution. Accordingly, a polymer having a solubility parameter ranging from 15 Mpa^{1/2} to 45 Mpa^{1/2} is preferably used, and the solubility parameter more preferably ranges from 15 Mpa^{1/2} to 25 Mpa^{1/2} and 30 Mpa^{1/2} to 45 Mpa^{1/2}. Thus, hydrophilic polymers having many polar groups are preferably used rather than hydrophobic polymers such as polyolefin. When the solubility parameter of the polymer is less than 15 MPa^{1/2} or higher than 45 MPa^{1/2}, the polymer is difficult to be swelled by a typical liquid electrolyte solution for a battery.

Non-limiting examples of the polymer binder may include, for example, polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methyl cellulose.

Furthermore, the polymer binder may also include PVDF-HFP. The term "PVDF-HFP polymer binder" refers to a vinylidene fluoride copolymer including a constituent unit of vinylidene fluoride (VDF) and a constituent unit of hexafluoropropylene (HFP). However, the polymer binder is not limited thereto, and may include a variety of materials.

The weight ratio of the inorganic particles and the polymer binder may be preferably, for example, in the range of 50:50 to 99:1, and more preferably, 70:30 to 95:5. If the content ratio of the organic particles to the polymer binder is less than 50:50, the content of polymer is so great that the pore size and porosity of the formed coating layer 124 may be reduced. If the content of the organic particles is greater than 99 parts by weight, the content of polymer is so small that the peeling resistance of the formed coating layer 124 may be weakened.

A solvent for the polymer binder preferably has a solubility parameter similar to that of the polymer binder to be used and a low boiling point. This is intended to facilitate uniform mixture and removal of the solvent afterward. Non-limiting examples of a usable solvent may include, for example, acetone, tetrahydrofuran, methylene chloride, chloroform, dimethylformamide, N-methyl-2-pyrrolidone (NMP), cyclohexane, water, or a mixture thereof.

A slurry in which inorganic particles are dispersed and a polymer binder is dissolved in a solvent may be prepared by dissolving the polymer binder in the solvent and then adding the inorganic particles thereto and dispersing the same. The inorganic particles may be pulverized in a suitable size and then added, but it is preferred that after the inorganic particles are added to the solution of the polymer binder, the inorganic particles are dispersed while being pulverized using a ball mill, etc.

As described above, because the porous coating layer 124 is formed by applying a liquid or gel slurry onto the polymer substrate 123 and then solidifying it, there is a certain height difference d from the surface even if the slurry is applied evenly and uniformly. In particular, since the attraction between the materials constituting the slurry acts on the side 126 more than the center 125, the height of the slurry in the side 126 is formed lower than that in the center 125. Therefore, as illustrated in FIG. 2, in the side 126 and the center 125 of the separator 12, there is a height difference d even in the porous coating layer 124 obtained by solidifying the slurry, and thus even if the electrode 11 is stacked to manufacture the unit cell 2, deviation occurred in the adhesion of the separator 12. Therefore, there was a problem in that the electrode 11 and the separator 12 did not adhere to each other or poorly adhered to each other, forming the non-adhesive region 22 on a portion of the side 21 of the unit cell 2.

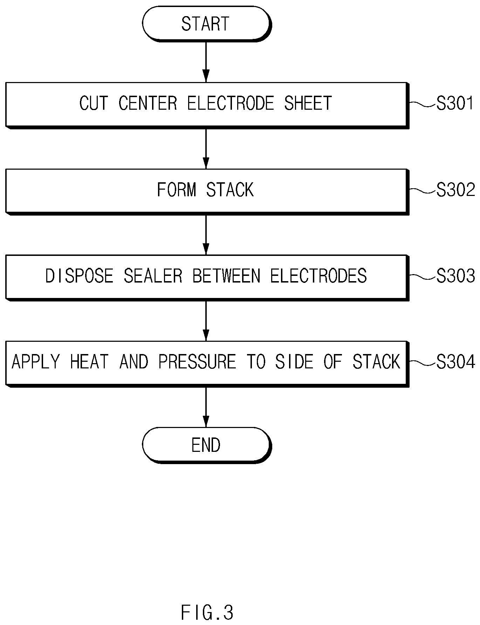

FIG. 3 is a flowchart of a unit cell manufacturing method according to an embodiment of the present invention.

According to an embodiment of the present invention, in a stack 20 in which the electrode 11 is tacked on separator sheets 1211 and 1221, a sealer 14 applies heat and pressure to at least one of the corners of the electrode 11 or the edges of the electrode, and thus it may prevent the formation of non-adhesive regions 22 on the side 21 of the unit cell 2, thereby preventing the reduction of the adhesion between the electrode 11 and the separator 12.

To this end, a unit cell manufacturing method according to an embodiment of the present invention includes: cutting electrode sheets 1111, 1121, and 1131 unwound from electrode reels 111, 112, and 113 to form a plurality of electrodes 11; forming a stack 20 by stacking the plurality of electrodes 11 on separator sheets 1211 and 1221 unwound from separator reels 121 and 122 while the plurality of electrodes 11 are spaced apart from each other and disposed in a row in the longitudinal direction of the separator sheets 1211 and 1221; disposing a sealer 14 between the plurality of electrodes 11 in the stack 20; and applying, with the sealer 14, heat and pressure to at least one of the corners of the electrode 11 or the edges of the electrode 11.

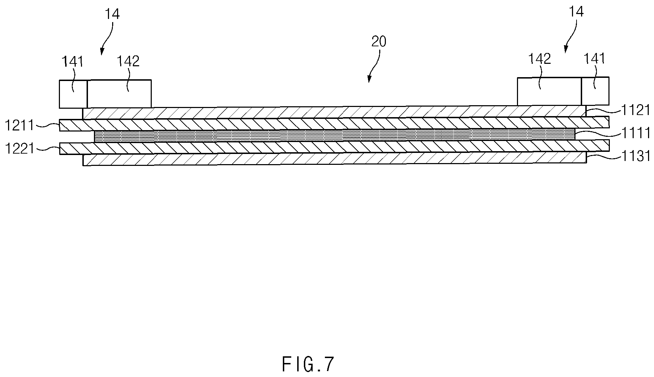

Hereinafter, each step illustrated in the flowchart of FIG. 3 will be described in detail with reference to FIGS. 4 and 7.

FIG. 4 is a schematic view of a unit cell manufacturing apparatus 1 according to an embodiment of the present invention.

As illustrated in FIG. 4, the unit cell manufacturing apparatus 1 according to an embodiment of the present invention includes: electrode reels 111, 112, and 113 from which electrode sheets 1111, 1121, and 1131, which is to be a plurality of electrodes 11, are unwound; separator reels 121 and 122 from which separator sheets 1211 and 1221 to be stacked with the electrodes 11 are unwound; and in a stack which is formed by stacking the plurality of electrodes with the separator sheets while the plurality of electrodes 11 are spaced apart from each other and disposed in a row in the longitudinal direction of the separator sheets 1211 and 1221, sealers 14 which are disposed between the plurality of electrodes 11 and applies heat and pressure to at least one of the corners of the electrodes 11 or the edges of the electrodes 11. In addition, the electrode reel may include a center electrode reel 111 from which a center electrode sheet 1111, which is to be a plurality of center electrodes 1112, is unwound, and the separator reels 121 and 122 may include an upper separator reel 121 from which an upper separator sheet 1211 to be stacked on an upper surface of the center electrode 1112, which is formed by cutting the center electrode sheet 1111, is unwound; and a lower separator reel 122 from which a lower separator sheet 1221 to be stacked on a lower surface of the center electrode 1112 is unwound.

As described above, unit cells 2 include full-cells and bi-cells. As described above, if the unit cell 2 is a bi-cell, the center electrode 1112 may be provided in an odd number such as one, and if the unit cell 2 is a full-cell, the center electrode 1112 may not be provided or may be provided in an even number such as two. Hereinafter, the unit cell 2 will be described as a bi-cell that has three electrodes 11 and two separators 12. However, this is just for convenience of description, and is not to limit the scope of the present invention.

The center electrode reel 111 is a reel on which the center electrode sheet 1111 is wound, and the center electrode sheet 1111 is unwound from the center electrode reel 111. If the unit cell 2 is an A-type bi-cell, the center electrode sheet 1111 is an anode sheet, and if the unit cell 2 is a C-type bi-cell, the center electrode sheet 1111 is a cathode sheet. These electrode sheets 1111, 1121 and 1131 may be prepared by coating a slurry of an electrode active material, a conductive agent, and a binder on an electrode collector, and then drying and pressing the coated electrode collector.

An upper separator reel 121 and a lower separator reel 122 are reels on which the separator sheets 1211 and 1221 are wound. In addition, the upper separator sheet 1211 unwound from the upper separator reel 121 is stacked on the upper surface of the central electrode 1112 which is formed by cutting the center electrode sheet 1111, and the lower separator sheet 1221 unwound from the lower separator reel 122 is stacked on the lower surface of the center electrode 1112.

The electrode reel may further include: an upper electrode reel 112 from which an upper electrode sheet 1121, which is to be upper electrodes 1122 to be stacked on the upper surface of the upper separator sheet 1211, is unwound; and a lower electrode reel 113 from which a lower electrode sheet 113, which is to be lower electrodes 1132 to be stacked on the lower surface of the lower separator sheet 1221, is unwound.

The upper electrode reel 112 is a reel on which the upper electrode sheet 1121 is wound, and the upper electrode sheet 1121 is unwound from the upper electrode reel 112. In addition, the lower electrode reel 113 is a reel on which the lower electrode sheet 1131 is wound, and the lower electrode sheet 1131 is unwound from the lower electrode reel 113. If the unit cell 2 is a full-cell, the upper electrode 1122 and the lower electrode 1131 have a different polarity. In addition, if the unit cell 2 is a bi-cell, the upper electrode 1122 and the lower electrode 1131 have the same polarity, and have a different polarity from the center electrode 1112. If the unit cell 2 is an A-type bi-cell, the center electrode sheet 1111 is an anode sheet, but the upper electrode sheet 1121 and the lower electrode sheet 1131 are cathode sheets, and if the unit cell 2 is a C-type bi-cell, the center electrode sheet 1111 is a cathode sheet, but the upper electrode sheet 1121 and the lower electrode sheet 1131 are anode sheets.

The upper electrode 1122 formed by cutting the upper electrode sheet 1121 is stacked on the upper surface of the upper separator sheet 1211, and the lower electrode 1132 formed by cutting the lower electrode sheet 1131 is stacked on the lower surface of the lower separator sheet 1221. As a result, a stack 20 is prepared in which the lower electrode 1132, the lower separator sheet 1221, the center electrode 1112, the upper separator sheet 1211, and the upper electrode 1122 are sequentially stacked.

The stack 20 is formed by stacking the plurality of electrodes 11 on the separator sheets 1211 and 1221 while the plurality of center electrodes 1112 are spaced apart from each other and disposed in a row in the longitudinal direction of the separator sheets 1211 and 1221. In this case, the upper electrode 1122, the center electrode 1112, and the lower electrode 1132 may have different spacings apart from each other, but, because the electrodes 11 with the same polarity have the same size, it is preferable that the spacing is always constant. In addition, it is desirable that the upper electrode 1122, the center electrode 1112, and the lower electrode 1132 are all aligned and disposed so that centers thereof coincide.

The sealers 14 are disposed between the plurality of electrodes 11 in the stack 20 and apply heat and pressure to at least one of the corners of the electrodes 11 or the edges of the electrodes 11. Therefore, the formation of the non-adhesive regions 22 on the side 21 of the unit cell 2 including the corner of the electrode 11 may be prevented, and the reduction of the adhesion between the electrode 11 and the separator 12 may be prevented. The sealers 14 will be described later in detail.

The laminator laminates an entire surface of the stack 20 which is formed by stacking the electrode 11 and the separator 12. The term "laminating" refers to bonding the electrode 11 and the separator 12 by applying heat and pressure to the stack 20. As illustrated in FIG. 4, the laminator may include a heater 15 which applies heat and pressure to the entire surface of the stack 20 and may further include a heating roller 16 which applies pressure to the stack 20 while rotating.

The heater 15 is composed of an upper heater 151 and a lower heater 152, which may apply heat and pressure to the entire surface of upper and lower surfaces of the stack 20, respectively. In the heater 15, surfaces in contact with the stack 20, that is, the lower surface of the upper heater 151 and the upper surface of the lower heater 152 may be formed substantially flat. Thus, heat and pressure may be uniformly applied to the entire surface of the stack 20.

When the heater 15 applies heat and pressure to the stack 20, the heating roller 16 may apply heat and pressure to the stack 20 while rotating. In general, the heating roller 16, which applies pressure while rotating, applies a higher pressure than the heater 15 that simply applies pressure with a flat surface. Thus, after the heater 15 applies heat and pressure to the stack 20, the heating roller 16 applies heat and pressure greater than those of the heater 15 to the stack 20 so that the heat and pressure applied to the stack (20) may be increased step by step. That is, this may prevent the inside of the stack 20 from being damaged due to rapid changes in temperature and pressure.

When the center electrode sheet 1111 is first unwound from the center electrode reel 111, a first cutter 131 cuts the center electrode sheet 1111 (S301). Then, the plurality of center electrodes 1112 are formed. In addition, the upper separator sheet 1211 is unwound from the upper separator reel 121 and stacked on the upper surface of the center electrode 1112, and the lower separator sheet 1221 is unwound from the lower separator reel 122 and stacked on the lower surface of the center electrode 1112.

Meanwhile, when the upper electrode sheet 1121 is unwound from the upper electrode reel 112, a second cutter 132 cuts the upper electrode sheet 1121 to form the upper electrode 1122, and when the lower electrode sheet 1131 is unwound from the lower electrode reel 113, a third cutter 133 cuts the lower electrode sheet 1131 to form the lower electrode 1132. The upper electrode 1122 is stacked on the upper surface of the upper separator sheet 1211, and the lower electrode 1132 is stacked on the lower surface of the lower separator sheet 1221. As a result, the stack 20 is prepared in which the lower electrode 1132, the lower separator sheet 1221, the center electrode 1112, the upper separator sheet 1211, and the upper electrode 1122 are sequentially stacked (S302).

In the stack 20, at least one of the upper electrode 1122 or the lower electrode 1132 may be omitted, and furthermore, at least one of the upper separator sheet 1211 or the lower separator sheet 1221 may be omitted. Hereinafter, it will be described that in the stack 20, these electrodes 11 and separators 12 are not omitted. However, this is just for convenience of description, and is not to limit the scope of the present invention.

After the formation of the stack 20, the laminator laminates the stack 20. As described above, the laminator includes the heater 15 and the heating roller 16, and, when laminating, after the heater 15 applies heat and pressure to the entire surface of the stack 20, the heating roller 16 may apply heat and pressure to the stack 20 while rotating.

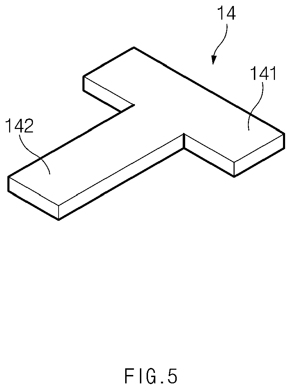

FIG. 5 is a perspective view of a sealer 14 according to an embodiment of the present invention.

As illustrated in FIG. 5, and in accordance with the independent claims 1 and 8, the sealer 14 includes: a first body 141; and a second body 142 vertically extending from the first body 141. Here, the second body 142 may extend from one end of the first body 141, but preferably extends from the center of the first body 141. That is, the sealer 14 may have a T-shape as a whole. Thus, with respect to the second body 142 of the sealer 14, one electrode 11 is disposed on one side and another electrode 11 is disposed on the other side, and thus heat and pressure can be applied to both electrodes 11 simultaneously.

A heating coil (not shown) is included inside the sealer 14. Therefore, when the sealer 14 is in contact with the stack 20 and applies pressure to the stack 20, heat generated from the heating coil may also be applied to the stack 20.

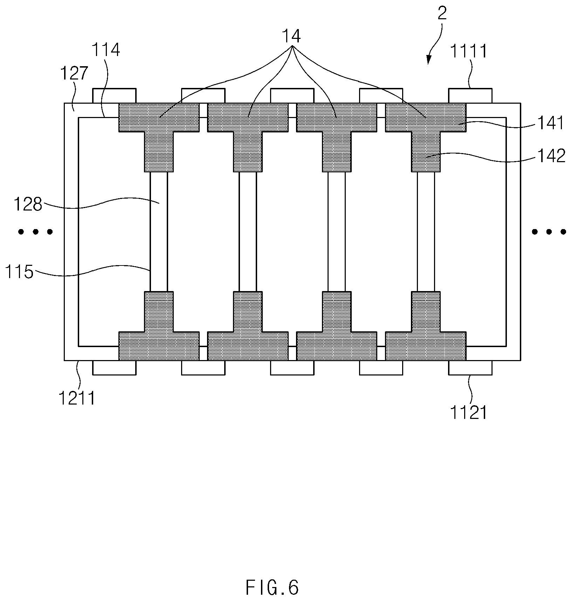

FIG. 6 is a plan view illustrating a state in which the sealers 14 according to an embodiment of the present invention applies heat and pressure to the stack 20, and FIG. 7 is a side view illustrating a state in which the sealer 14 according to an embodiment of the present invention applies heat and pressure to the stack 20.

As described above, there may be a height difference of the porous coating layer 124 in the side 126 and the center 125 of the separator 12. Thus, deviation in the adhesion of the separator 12 occurs, and thus the non-adhesive region 22, to which the electrode 11 does not adhere or poorly adheres, may be formed on the side 126 of the separator 12.

Therefore, according to an embodiment of the present invention, when the stack 20 is formed, the laminator applies heat and pressure to the stack 20, and then, as illustrated in FIG. 6, the sealers 14 are disposed between the plurality of electrodes 11 in the stack 20 (S303). In addition, the sealers 14 apply heat and pressure to the side 21 of the stack 20, that is, to at least one of the corners of electrodes 11 or the edges of the electrodes 11. In this case, the sealers 14 are formed in plurality, and are disposed on both sides of the stack 20, and thus may apply heat and pressure to each of both the sides 21 of the stack 20. The sides 21 are preferably regions in which each length from both ends of the stack 20 is 1% to 30% with respect to the total length, more preferably, 5% to 20%.

If the sealers 14 are not used and heat and pressure being applied to the entire surface of the stack 20 by the laminator are merely increased, the center of the stack 20 excessively receives pressure compared to the side 21. Then, pores of the porous coating layer 124 of the separator 12 are destroyed to reduce the air permeability, and thereby the electrode 11 and the separator 12 may not be fully impregnated in the electrolyte solution later.

The sealer 14 includes a first body 141 and a second body 142. The first body 141 of the sealer 14 may apply heat and pressure to a first edge 114 toward the outside of the stack 20 in the electrode 11, and the second body 142 may apply heat and pressure to a second edge 115, which faces another neighboring electrode 11 and crosses with the first edge 114 to form the corner, in the electrode 11.

The first edge 114 is the edge toward the outside of the stack 20 among several edges of the electrode 11. In addition, the first body 141 of the sealer 14 is formed in a direction parallel to the first edge 114. Thus, when the first body 141 is brought into contact with the stack 20, the first body 141 can be brought into contact with the first edge 114 of the electrode 11, thereby applying heat and pressure to the first edge 114.

The second edge 115 is the edge, which forms the corner of the electrode 11 together with the first edge 114, among several edges of the electrode 11. As described above, on the stack 20, the electrodes 11 are spaced apart from each other and disposed in a row in the longitudinal direction of the separator sheet. Therefore, the electrodes 11 are disposed adjacent to each other, and the second edge 115 faces another neighboring electrode 11. In addition, the second body 142 of the sealer 14 is formed in a direction parallel to the second edge 115. Thus, when the second body 142 is brought into contact with the stack 20, the second body 142 can be brought into contact with the second edge 115 of the electrode 11, thereby applying heat and pressure to the second edge 114.

The sealers 14 are formed in plurality, and may be disposed at both the sides of the stack 20. Moreover, the sealers 14 may each be disposed between electrodes 11 which are arranged in a row in the stack 20. Therefore, as illustrated in FIG. 6, heat and pressure are simultaneously applied to the plurality of electrodes 11 in the stack 20, thereby increasing production efficiency of the unit cell 2.

As described above, according to an embodiment of the present invention, the plurality of sealers 14 may apply heat and pressure to the corners of the electrodes 11. Therefore, the formation of the non-adhesive regions 22 on the side 21 of the unit cell 2 may be prevented, and the reduction of the adhesion between the electrode 11 and the separator 12 may be prevented.

When the sealers 14 apply heat and pressure to the corners of the electrodes 11, the first body 141 and the second body 142 each may have a simple rectangular shape. However, the sealers 14 may not apply heat and pressure to the corners of the electrodes 11, but to the edges of the electrodes, in particular, only to the edges of the electrodes included in both the sides 21 of the stack 20. In this case, the parts of the sealers 14 corresponding to the corners of the electrodes 11 may be recessed. Even in this case, heat and pressure may also be applied to both the sides 21 of the stack 20, and thus the formation of the non-adhesive regions 22 may be prevented.

After the sealers 14 apply heat and pressure to the sides 21 of the stack 20, a fourth cutter 134 cuts the stack 20, and thus the unit cell 2 may be prepared.

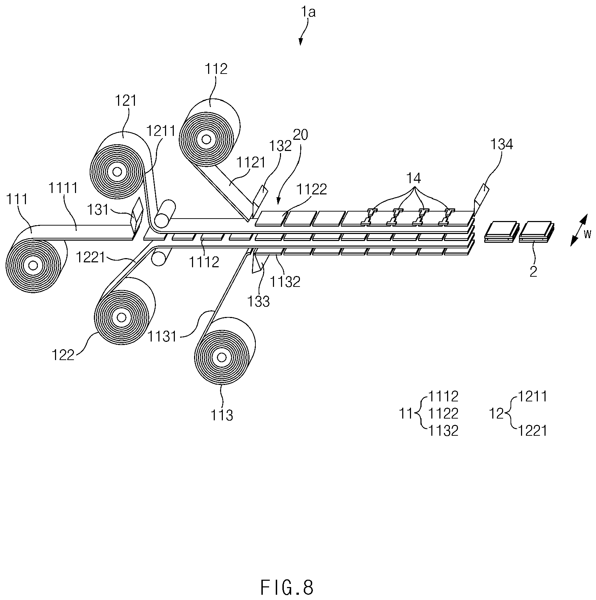

FIG. 8 is a schematic view of a unit cell manufacturing apparatus 1a according to another embodiment of the present invention.

According to another embodiment of the present invention, as illustrated in FIG. 8, a laminator is not included. That is, neither a heater 15 nor a heating roller 16 are included.

If the sealers 14 are used, heat and pressure may be applied to both the sides 21 of the stack 20, and thus the formation of the non-adhesive regions 22 in the sides 21 of the unit cell 2 may be prevented. Therefore, according to another embodiment of the present invention, even though the laminator does not laminate the entire surface of the stack 20, the electrodes 11 and the separators 12 may be generally uniformly bonded. Moreover, the laminator is not included, and thus the overall process speed may increase, thereby increasing the production efficiency of the unit cells 2.

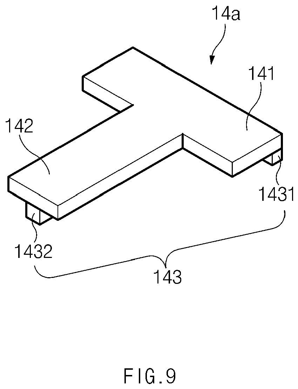

FIG. 9 is a perspective view of a sealer 14a according to still another embodiment of the present invention.

According to still another embodiment of the present invention, as illustrated in FIG. 9, the sealer 14a may further include: a first protrusion 1431 which protrudes downward from the lower surface of the first body 141 and is elongated in the longitudinal direction of the first body 141; and a second protrusion 1432 which protrudes downward from the lower surface of the second body 142 and is elongated in the longitudinal direction of the second body 142.

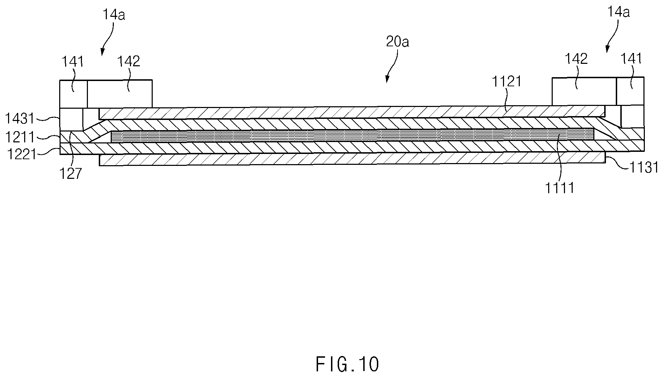

FIG. 10 is a side view illustrating a state in which a sealer 14a according to still yet another embodiment of the present invention applies heat and pressure to a stack 20a.

When the sealer 14a applies heat and pressure to the stack 20a, the first protrusion 1431 may apply heat and pressure to a first region 127, which extends to the outside from the first edge 114 of the electrode 11, of the separator sheets 1211 and 1221, and the second protrusion 1432 may apply heat and pressure to a second region 128, which is formed between the plurality of electrodes 11, of the separator sheets 1211 and 1221.

The first region 127 is a portion of the separator sheets 1211 and 1221, which extends to the outside from the first edge 114 of the electrode 11. Because the first edge 114 of the electrode 11 is toward the outside, the first region 127 is also toward the outside of the stack 20a. In addition, the first protrusion 1431 of the sealer 14a pressurizes the first region 127 of the separator sheets 1211 and 1221, thereby bonding the upper separator sheet 1211 and the lower separator sheet 1221 as illustrated in FIG. 10.

The second region 128 is a portion of the separator sheets 1211 and 1221, which is formed between the plurality of the electrodes 11. That is, the region is extended from the second edge 115 of the electrode 11. In addition, the second protrusion 1432 of the sealer 14a pressurizes the second region 128 of the separator sheets 1211 and 1221, thereby bonding the upper separator sheet 1211 and the lower separator sheet 1221.

In order for the first protrusion 1431 and the second protrusion 1432 to pressurize the separator sheet 1211 to be easily bonded to the lower separator sheet 1221, it is preferable that the first protrusion 1431 and the second protrusion 1432 are formed thicker than the total thickness of the center electrode 1112 and the upper electrode 1122.

As described above, according to still another embodiment of the present invention, the adhesion between the separator 12 and the electrode 11 may be improved, as well as the upper separator sheet 1211 and the lower separator sheet 1221 may adhere to each other, thereby forming the unit cell 2 more firmly.

Those of ordinary skill in the art to which the present invention pertains will understand that the present invention can be carried out in other specific forms without changing the technical idea or essential features. Therefore, the above-described embodiments are to be understood in all aspects as illustrative and not restrictive. Accordingly, the scope of the present invention is defined by the appended claims rather than the foregoing description and the exemplary embodiments described therein. Various modifications made within the meaning of an equivalent of the claims of the invention and within the claims are to be regarded to be in the scope of the present invention.

**[Description of the Symbols]**

| | | | |
|---|---|---|---|
| 1: | Unit Cell Manufacturing Apparatus | 2: | Unit Cell |
| 11: | Electrode | 12: | Separator |
| 14: | Sealer | 15: | Heater |
| 16: | Roller | 20: | Stack |
| 21: | Side of Stack | 22: | Non-adhesive Region |
| 111: | Center Electrode Reel | 112: | Upper Electrode Reel |
| 113: | Lower Electrode Reel | 114: | First Edge |
| 115: | Second Edge | 121: | Upper Separator Reel |
| 122: | Lower Separator Reel | 123: | Polymer Substrate |
| 124: | Porous Coating Layer | 125: | Center of Separator |
| 126: | Side of Separator | 127: | First Region |
| 128: | Second Region | 131: | First Cutter |
| 132: | Second Cutter | 133: | Third Cutter |
| 134: | Fourth Cutter | 141: | First body |
| 142: | Second Body | 143: | Protrusion |
| 1431: | First Protrusion | 1432: | Second Protrusion |
| 151: | Upper Heater | 152: | Lower Heater |
| 1111: | Center Electrode Sheet | 1121: | Upper Electrode Sheet |
| 1131: | Lower Electrode Sheet | 1112: | Center Electrode |
| 1122: | Upper Electrode | 1132: | Lower Electrode |
| 1211: | Upper Separator Sheet | 1221: | Lower Separator Sheet |

## Claims

1. A unit cell manufacturing apparatus (1) comprising:
an electrode reel (111, 112, 113) from which an electrode sheet (1111, 1121, 1131), which is to be a plurality of electrodes (11), is unwound;
a separator reel (121, 122) from which a separator sheet (1211, 1221) to be stacked with the electrodes (11) is unwound;
a sealer (14), in a stack (20) which is formed by stacking the plurality of electrodes (11) with the separator sheet (1211, 1221) while the plurality of electrodes (11) are spaced apart from each other and disposed in a row in the longitudinal direction of the separator sheet (1211, 1221), the sealer (14) which is disposed between a pair of neighoring electrodes (11) of the plurality of electrodes (11) and applies heat and pressure to at least one of corners of the electrodes (11) or edges of the electrodes (11), and
a laminator which laminates the stack (20).

2. The unit cell manufacturing apparatus (1) of claim 1, wherein the sealer (14) comprises:
a first body (141); and
a second body (142) vertically extending from the first body (141).

3. The unit cell manufacturing apparatus (1) of claim 2, wherein the sealer (14) further comprises:
a first protrusion (1431) which protrudes downward from a lower surface of the first body (141) and is elongated in a longitudinal direction of the first body (141); and
a second protrusion (1432) which protrudes downward from a lower surface of the second body (142) and is elongated in a longitudinal direction of the second body (142) .

4. The unit cell manufacturing apparatus (1) of claim 1, wherein the laminator comprises a heater (15) which applies heat and pressure to the entire surface of the stack (20) .

5. The unit cell manufacturing apparatus (1) of claim 4, wherein the laminator further comprises a heating roller (16) which applies heat and pressure to the stack (20) while rotating.

6. The unit cell manufacturing apparatus (1) of claim 1, wherein the electrode reel (111, 112, 113) comprises a center electrode reel (111) from which a center electrode sheet (1111), which is to be a plurality of center electrodes (1112), is unwound, and
the separator reel (121, 122) comprises:
an upper separator reel (121) from which an upper separator sheet (1211) to be stacked on an upper surface of the center electrode (1112) formed by cutting the central electrode sheet (1111) is unwound; and
a lower separator reel (122) from which a lower separator sheet (1221) to be stacked on a lower surface of the center electrode (1112) is unwound.

7. The unit cell manufacturing apparatus (1) of claim 6, wherein the electrode reel (111, 112, 113) further comprises:
an upper electrode reel (112) from which an upper electrode sheet (1121), which is to be an upper electrode (1122) to be stacked on the upper surface of the upper separator sheet (1211), is unwound; and
a lower electrode reel (113) from which a lower electrode sheet (1131), which is to be a lower electrode (1132) to be stacked on the lower surface of the lower separator sheet (1221), is unwound.

8. A unit cell manufacturing method comprising:
cutting an electrode sheet (1111, 1121, 1131) unwound from an electrode reel (111, 112, 113) to form a plurality of electrodes (11);
forming a stack (20) by stacking the plurality of electrodes (11) on a separator sheet (1211, 1221) unwound from a separator reel (121, 122) while the plurality of electrodes (11) are spaced apart from each other and disposed in a row in a longitudinal direction of the separator sheet (1211, 1221);
disposing a sealer (14) between a pair of neighoring electrodes (11) of the plurality of electrodes (11) in the stack (20);
applying, with the sealer (14), heat and pressure to at least one of corners of the electrode (11) or edges of the electrode (11), and
laminating the stack (20) after the forming of the stack (20) and before the disposing of the sealer (14).

9. The unit cell manufacturing method of claim 8, wherein the sealer (14) comprises:
a first body (141); and
a second body (142) vertically extending from the first body (141).

10. The unit cell manufacturing method of claim 9, wherein, in the applying of heat and pressure,
the first body (141) applies heat and pressure to a first edge, which is directed toward the outside of the stack, among the edges of the electrode (11), and
the second body (142) applies heat and pressure to a second edge, which faces another neighboring electrode (11) and crosses with the first edge to form the corner, among the edges of the electrode (11).

11. The unit cell manufacturing method of claim 10, wherein the sealer (14) further comprises:
a first protrusion (1431) which protrudes downward from a lower surface of the first body (141) and is elongated in a longitudinal direction of the first body (141); and
a second protrusion (1432) which protrudes downward from a lower surface of the second body (142) and is elongated in a longitudinal direction of the second body (142) .

12. The unit cell manufacturing method of claim 11, wherein, in the applying of heat and pressure,
the first protrusion (1431) applies heat and pressure to a first region (127), which extends to the outside from the first edge (114) of the electrode (11), of the separator sheet (1211, 1221), and the second protrusion (142) applies heat and pressure to a second region (128), which is formed between the plurality of electrodes (11), of the separator sheet (1211, 1221).

13. The unit cell manufacturing method of claim 8, wherein the laminating further comprises: applying heat and pressure to an entire surface of the stack (20) by a heater (15); and
applying heat and pressure to the stack by a heating roller (16) while the heating roller rotates.

## Patentansprüche

1. Zelleinheit-Herstellungsvorrichtung (1), welche aufweist:
eine Elektrodenrolle (111, 112, 113), von der ein Elektrodenblatt (1111, 1121, 1131) abgewickelt wird, das eine Mehrzahl von Elektroden (11) werden soll;
eine Separatorrolle (121, 122), von der ein mit den Elektroden (11) zu stapelndes Separatorblatt (1211, 1221) abgewickelt wird,
einen Versiegler (14) in einem Stapel (20), der durch Stapeln der Mehrzahl von Elektroden (21) mit dem Separatorblatt (1211, 1221) gebildet wird, während die Mehrzahl von Elektroden (11) voneinander beabstandet sind und in einer Reihe in der Längsrichtung des Separatorblatts (1211, 1221) angeordnet sind,
wobei der Versiegler (14) zwischen einem Paar von benachbarten Elektroden (11) der Mehrzahl von Elektroden (11) angeordnet ist und Wärme und Druck auf Ecken der Elektroden (11) oder/und Ränder der Elektroden (11) ausübt, und
einen Laminator, der den Stapel (20) laminiert.

2. Die Zelleinheit-Herstellungsvorrichtung (1) von Anspruch 1, wobei der Versiegler (14) aufweist:
einen ersten Körper (141);
einen zweiten Körper (142), der sich vertikal von dem ersten Körper (141) erstreckt.

3. Die Zelleinheit-Herstellungsvorrichtung (1) von Anspruch 2, wobei der Versiegler (14) ferner aufweist:
einen ersten Vorsprung (1431), der von einer Unterseite des ersten Körpers (141) nach unten vorsteht und in einer Längsrichtung des ersten Körpers (141) langgestreckt ist; und
einen zweiten Vorsprung (1432), der von einer Unterseite des zweiten Körpers (142) nach unten vorsteht und in einer Längsrichtung des zweiten Körpers (142) langgestreckt ist.

4. Die Zelleinheit-Herstellungsvorrichtung (1) von Anspruch 1, wobei der Laminator einen Heizer (15) aufweist, der auf die gesamte Oberfläche des Stapels (20) Wärme und Druck ausübt.

5. Die Zelleinheit-Herstellungsvorrichtung (1) von Anspruch 4, wobei der Laminator ferner eine Heizwalze (16) aufweist, die während Drehung Wärme und Druck auf den Stapel (20) ausübt.

6. Die Zelleinheit-Herstellungsvorrichtung (1) von Anspruch 1, wobei die Elektrodenrolle (111, 112, 113) eine mittlere Elektrodenrolle (111) aufweist, von der ein mittleres Elektrodenblatt (1111) abgewickelt wird, das eine Mehrzahl von mittleren Elektroden (1112) werden soll, und
die Separatorrolle (121, 122) aufweist:
eine obere Separatorrolle (121), von der ein oberes Separatorblatt (1211) abgewickelt wird, das auf eine Oberseite der durch Schneiden des mittleren Elektrodenblatts (1111) gebildeten mittleren Elektrode (1112) zu stapeln ist; und
eine untere Separatorrolle (122), von der ein unteres Separatorblatt (1221) abgewickelt wird, das auf eine Unterseite der mittleren Elektrode (1112) zu stapeln ist.

7. Die Zelleinheit-Herstellungsvorrichtung (1) von Anspruch 6, wobei die Elektrodenrolle (111, 112, 113) ferner aufweist,
eine obere Elektrodenrolle (112), von der ein oberes Elektrodenblatt (1121) abgewickelt wird, das eine auf eine die Oberseite des oberen Separatorblatts (1211) zu stapelnde obere Elektrode (1122) werden soll;
eine untere Elektrodenrolle (113), von der ein unteres Elektrodenblatt (1131) abgewickelt wird, das eine auf die Unterseite des unteren Separatorblatts (1221) zu stapelnde untere Elektrode (1132) werden soll.

8. Zelleinheit-Herstellungsverfahren, welches aufweist:
Schneiden eines von einer Elektrodenrolle (111, 112, 113) abgewickelten Elektrodenblatts (1111, 1121, 1131) zur Bildung einer Mehrzahl von Elektroden (11),
Bilden eines Stapels (20) durch Stapeln der Mehrzahl von Elektroden (11) auf ein von einer Separatorrolle (121, 122) abgewickeltes Separatorblatt (1211, 1221), während die Mehrzahl von Elektroden (11) voneinander beabstandet und in einer Reihe in einer Längsrichtung des Separatorblatts (1211, 1221) angeordnet werden;
Anordnen eines Versieglers (14) zwischen einem Paar von benachbarten Elektroden (11) der Mehrzahl von Elektroden (11) in dem Stapel (20);
Ausüben, mit dem Versiegler (14), von Wärme und Druck auf Ecken der Elektrode (11) oder/und Ränder der Elektrode (11), und
Laminieren des Stapels (20) nach der Bildung des Stapels (20) und vor dem Anordnen des Versieglers (14).

9. Das Zelleinheit-Herstellungsverfahren von Anspruch 8, wobei der Versiegler (14) aufweist:
einen ersten Körper (141);
einen zweiten Körper (142), der sich vertikal von dem ersten Körper (141) erstreckt.

10. Das Zelleinheit-Herstellungsverfahren von Anspruch 9, wobei beim Ausüben von Wärme und Druck,
der erste Körper (141) Wärme und Druck auf einen ersten Rand, der zur Außenseite des Stapels gerichtet ist, unter den Rändern der Elektroden (11), ausübt,
der zweite Körper (142) Wärme und Druck auf einen zweiten Rand, der zu einer anderen benachbarten Elektroden (11) weist und sich mit dem ersten Rand zur Bildung einer Ecke kreuzt, unter den Rändern der Elektrode (11), ausübt.

11. Das Zelleinheit-Herstellungsverfahren von Anspruch 10, wobei der Versiegler (14) ferner aufweist:
einen ersten Vorsprung (1431), der von einer Unterseite des ersten Körpers (141) nach unten vorsteht und in einer Längsrichtung des ersten Körpers (141) langgestreckt ist; und
einen zweiten Vorsprung (1432), der von einer Unterseite des zweiten Körpers (142) nach unten vorsteht und in einer Längsrichtung des zweiten Körpers (142) langgestreckt ist.

12. Das Zelleinheit-Herstellungsverfahren von Anspruch 11, wobei beim Ausüben von Wärme und Druck, der erste Vorsprung (1431) Wärme und Druck auf einen ersten Bereich (127) des Separatorblatts (1211, 1221) ausübt, der sich vom ersten Rand (114) der Elektrode (11) zur Außenseite erstreckt, und der zweite Vorsprung (142) Wärme und Druck auf einen zweiten Bereich (128) des Separatorblatts (1211, 1221) ausübt, der zwischen der Mehrzahl von Elektroden (11) ausgebildet ist.

13. Das Zelleinheit-Herstellungsverfahren von Anspruch 8, wobei das Laminieren ferner aufweist:
Ausüben von Wärme und Druck auf eine gesamte Oberfläche des Stapels (20) durch einen Heizer (15); und
Ausüben von Wärme und Druck auf den Stapel durch eine Heizwalze (16), während sich die Heizwalze dreht.

## Revendications

1. Appareil de fabrication de cellule unitaire (1) comprenant :
une bobine d'électrodes (111, 112, 113) de laquelle est déroulée une feuille d'électrodes (1111, 1121, 1131), qui est destinée à être une pluralité d'électrodes (11) ;
une bobine de séparateurs (121, 122) de laquelle est déroulée une feuille de séparateurs (1211, 1221) à empiler avec les électrodes (11) ;
un dispositif d'étanchéité (14), dans une pile (20) qui est formée par l'empilement de la pluralité d'électrodes (11) avec la feuille de séparateurs (1211, 1221) pendant que la pluralité d'électrodes (11) sont espacées les unes des autres et disposées en rangée dans la direction longitudinale de la feuille de séparateurs (1211, 1221), le dispositif d'étanchéité (14) étant disposé entre une paire d'électrodes voisines (11) de la pluralité d'électrodes (11) et appliquant une chaleur et une pression à au moins l'un parmi des coins des électrodes (11) ou des bords des électrodes (11), et
un dispositif de stratification qui stratifie la pile (20).

2. Appareil de fabrication de cellule unitaire (1) selon la revendication 1, dans lequel le dispositif d'étanchéité (14) comprend :
un premier corps (141) ; et
un second corps (142) s'étendant verticalement depuis le premier corps (141).

3. Appareil de fabrication de cellule unitaire (1) selon la revendication 2, dans lequel le dispositif d'étanchéité (14) comprend en outre :
une première saillie (1431) qui fait saillie vers le bas depuis une surface inférieure du premier corps (141) et est allongée dans une direction longitudinale du premier corps (141) ; et
une seconde saillie (1432) qui fait saillie vers le bas depuis une surface inférieure du second corps (142) et est allongée dans une direction longitudinale du second corps (142).

4. Appareil de fabrication de cellule unitaire (1) selon la revendication 1, dans lequel le dispositif de stratification comprend un élément chauffant (15) qui applique une chaleur et une pression sur toute la surface de la pile (20).

5. Appareil de fabrication de cellule unitaire (1) selon la revendication 4, dans lequel le dispositif de stratification comprend en outre un rouleau chauffant (16) qui applique une chaleur et une pression à la pile (20) tout en tournant.

6. Appareil de fabrication de cellule unitaire (1) selon la revendication 1, dans lequel la bobine d'électrodes (111, 112, 113) comprend une bobine d'électrodes centrales (111) de laquelle est déroulée une feuille d'électrodes centrales (1111), qui est destinée à être une pluralité d'électrodes centrales (1112), et
la bobine de séparateurs (121, 122) comprend :
une bobine de séparateurs supérieurs (121) de laquelle est déroulée une feuille de séparateurs supérieurs (1211) à empiler sur une surface supérieure de l'électrode centrale (1112) formée par le découpage de la feuille d'électrodes centrales (1111) ; et
une bobine de séparateurs inférieurs (122) de laquelle est déroulée une feuille de séparateurs inférieurs (1221) à empiler sur une surface inférieure de l'électrode centrale (1112).

7. Appareil de fabrication de cellule unitaire (1) selon la revendication 6, dans lequel la bobine d'électrodes (111, 112, 113) comprend en outre :
une bobine d'électrodes supérieures (112) de laquelle est déroulée une feuille d'électrodes supérieures (1121), qui est destinée à être une électrode supérieure (1122) à empiler sur la surface supérieure de la feuille de séparateurs supérieurs (1211) ; et
une bobine d'électrodes inférieures (113) de laquelle est déroulée une feuille d'électrodes inférieures (1131), qui est destinée à être une électrode inférieure (1132) à empiler sur la surface inférieure de la feuille de séparateurs inférieurs (1221).

8. Procédé de fabrication de cellule unitaire comprenant :
le découpage d'une feuille d'électrodes (1111, 1121, 1131) déroulée d'une bobine d'électrodes (111, 112, 113) pour former une pluralité d'électrodes (11) ;
la formation d'une pile (20) par l'empilement de la pluralité d'électrodes (11) sur une feuille de séparateurs (1211, 1221) déroulée d'une bobine de séparateurs (121, 122) pendant que la pluralité d'électrodes (11) sont espacées les unes des autres et disposées en rangée dans une direction longitudinale de la feuille de séparateurs (1211, 1221) ;
la disposition d'un dispositif d'étanchéité (14) entre une paire d'électrodes voisines (11) de la pluralité d'électrodes (11) dans la pile (20) ;
l'application, avec le dispositif d'étanchéité (14), d'une chaleur et d'une pression à au moins l'un parmi des coins de l'électrode (11) ou des bords de l'électrode (11), et
la stratification de la pile (20) après la formation de la pile (20) et avant la disposition du dispositif d'étanchéité (14).

9. Procédé de fabrication de cellule unitaire selon la revendication 8, dans lequel le dispositif d'étanchéité (14) comprend :
un premier corps (141) ; et
un second corps (142) s'étendant verticalement depuis le premier corps (141).

10. Procédé de fabrication de cellule unitaire selon la revendication 9, dans lequel, dans l'application d'une chaleur et d'une pression,
le premier corps (141) applique une chaleur et une pression à un premier bord, qui est dirigé vers l'extérieur de la pile, parmi les bords de l'électrode (11), et
le second corps (142) applique une chaleur et une pression à un second bord, qui fait face à une autre électrode voisine (11) et qui est en intersection avec le premier bord pour former le coin, parmi les bords de l'électrode (11).

11. Procédé de fabrication de cellule unitaire selon la revendication 10, dans lequel le dispositif d'étanchéité (14) comprend en outre :
une première saillie (1431) qui fait saillie vers le bas depuis une surface inférieure du premier corps (141) et est allongée dans une direction longitudinale du premier corps (141) ; et
une seconde saillie (1432) qui fait saillie vers le bas depuis une surface inférieure du second corps (142) et est allongée dans une direction longitudinale du second corps (142).

12. Procédé de fabrication de cellule unitaire selon la revendication 11, dans lequel, dans l'application d'une chaleur et d'une pression,
la première saillie (1431) applique une chaleur et une pression à une première région (127), qui s'étend vers l'extérieur depuis le premier bord (114) de l'électrode (11), de la feuille de séparateurs (1211, 1221), et la seconde saillie (142) applique une chaleur et une pression à une seconde région (128), qui est formée entre la pluralité d'électrodes (11), de la feuille de séparateurs (1211, 1221).

13. Procédé de fabrication de cellule unitaire selon la revendication 8, dans lequel la stratification comprend en outre : l'application d'une chaleur et d'une pression à toute une surface de la pile (20) par un élément chauffant (15) ; et
l'application d'une chaleur et d'une pression à la pile par un rouleau chauffant (16) pendant que le rouleau chauffant tourne.
